(19) **Europäisches Patentamt / European Patent Office / Office européen des brevets**

(11) **EP 2 564 176 B1**

(12) **FASCICULE DE BREVET EUROPEEN**

(45) Date de publication et mention
de la délivrance du brevet:
**22.10.2014   Bulletin 2014/43**

(21) Numéro de dépôt: **11716910.2**

(22) Date de dépôt: **27.04.2011**

(51) Int Cl.:
*G01L 7/20* (2006.01)   *B01L 3/00* (2006.01)
*B81B 1/00* (2006.01)   *G01L 7/18* (2006.01)
*G01L 9/00* (2006.01)

(86) Numéro de dépôt international:
**PCT/EP2011/056656**

(87) Numéro de publication internationale:
**WO 2011/134997 (03.11.2011 Gazette 2011/44)**

(54) **DISPOSITIF FORMANT MANOMETRE DESTINE A LA MESURE DE PRESSION DE FLUIDE DIPHASIQUE, PROCEDE DE REALISATION ET RESEAU FLUIDIQUE ASSOCIES**

VORRICHTUNG ZUR BILDUNG EINES MANOMETERS ZUM MESSEN EINES ZWEIPHASIGEN FLÜSSIGKEITSDRUCKS, ZUGEHÖRIGES VERFAHREN ZUR HERSTELLUNG UND FLÜSSIGKEITSNETZWERK

DEVICE FORMING A MANOMETER INTENDED FOR MEASURING BIPHASE FLUID PRESSURE, ASSOCIATED METHOD OF MANUFACTURE AND FLUIDIC NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **28.04.2010   FR 1053276**

(43) Date de publication de la demande:
**06.03.2013   Bulletin 2013/10**

(73) Titulaire: **Commissariat à l'Énergie Atomique et aux Énergies Alternatives
75015 Paris (FR)**

(72) Inventeurs:
 • **PHAN, Hai Trieu
F-38000 Grenoble (FR)**
 • **CORONEL, Philippe
F-38530 Barraux (FR)**

 • **FUGIER, Pascal
F-38190 Bernin (FR)**
 • **GAVILLET, Jérôme
F-38120 Saint-egreve (FR)**

(74) Mandataire: **Ilgart, Jean-Christophe
BREVALEX
95, rue d'Amsterdam
75378 Paris Cedex 8 (FR)**

(56) Documents cités:
**WO-A2-03/076082      US-B1- 6 843 121**

 • **SRIVASTAVA, N. AND BURNS, M. A.: "Microfluidic pressure sensing using trapped air compression", LAB ON A CHIP, vol. 7, 4 avril 2007 (2007-04-04), pages 633-637, XP002608061, DOI: 10.1039/B617067F**

**Description**

**DOMAINE TECHNIQUE**

L'invention concerne un dispositif formant manomètre, destiné à mesurer la pression d'un fluide diphasique dans un réseau fluidique.

Elle a trait à une amélioration de la sensibilité d'un manomètre en permettant une diminution notoire des dimensions et son intégration dans un réseau fluidique.

Les applications particulièrement visées par l'invention sont les échangeurs thermiques à fluides diphasiques, la pile à combustible ou autre système impliquant l'utilisation d'un mélange diphasique fonctionnant autour de la pression atmosphérique.

**ART ANTERIEUR**

Dans des systèmes, tels qu'un échangeur thermique à fluide diphasique ou la pile à combustible, les phases liquide et vapeur d'un même fluide sont simultanément présentes dans le réseau fluidique supportant les échanges thermique et massique.

La pression du fluide, le rapport de flux massique entre les phases vapeur et liquide (titre) du fluide diphasique ainsi que leur distribution respective dans le réseau fluidique sont des paramètres révélateurs, à chaque instant, de l'efficacité de fonctionnement du système.

Ainsi, la connaissance précise de ces paramètres, en temps réel et dans les points critiques du réseau fluidique, tels que les points chauds, les points d'assèchement, les points d'engorgement, pourrait permettre de prévenir un dysfonctionnement/détérioration ou de corriger/ajuster le régime de fonctionnement des systèmes.

Autrement dit, il serait souhaitable de pouvoir intégrer des dispositifs de mesure précis de ces paramètres plus particulièrement de la pression, directement dans les réseaux fluidiques de systèmes évoqués ci-dessus, sans nuire à leur fonctionnement ou à leur compacité.

Il est connu de mesurer la pression d'un liquide à l'aide d'un manomètre.

En particulier, il est connu de mesurer la pression d'un liquide en mesurant le déplacement d'un ménisque du liquide dans un tube capillaire. Un dispositif selon le préambule de la revendication 1 est divulgué dans l'article " Microfluidic pressure sensing using trapped air compression", Lab on a chip 7 (2007), p. 633-637 par Srirastava et Burns.

Le brevet US 4, 404, 855 propose la mesure d'un différentiel de pression par mesure du déplacement d'un ménisque de liquide à l'interface avec une bulle d'air injectée par une seringue afin d'augmenter d'un facteur $10^4$ la sensibilité de mesure. Les dimensions du dispositif de mesure ainsi proposé sont macroscopiques et ne permettent pas son intégration dans un réseau fluidique d'un système compact. En outre, le déplacement minimum du ménisque qui peut être observé est de l'ordre de 0,1 mm et nécessite l'utilisation de moyens optiques extérieurs à l'élément sensible du manomètre à proprement parler.

Le but de l'invention est alors de proposer une solution permettant d'intégrer un dispositif de mesure précis de la pression d'un fluide diphasique dans un réseau fluidique d'un système, tel qu'un échangeur thermique ou une pile à combustible sans nuire au fonctionnement de celui (celle)-ci ni à sa compacité.

**EXPOSÉ DE L'INVENTION**

Pour ce faire, l'invention a pour objet un dispositif formant manomètre, destiné à la mesure de la pression d'un fluide diphasique dans un réseau fluidique, comprenant :

- un premier canal à l'intérieur duquel un fluide diphasique est apte à circuler,
- un deuxième canal débouchant sur le premier canal, le deuxième canal étant borgne, avec chacune de ses dimensions inférieure à la longueur capillaire de la phase liquide du fluide, et avec sa paroi longitudinale présentant un gradient d'énergie de surface décroissant depuis son entrée vers le fond, le gradient d'énergie de surface permettant d'augmenter l'angle de mouillage du ménisque de la phase liquide du fluide dans le canal borgne depuis son entrée vers le fond.

La longueur capillaire est une dimension caractéristique d'un liquide sur laquelle les forces capillaires et les forces gravitationnelles sont de même grandeurs. Pour l'eau, la longueur capillaire 1c et le volume capillaire Vc ont pour valeur respectivement :

$$l_c \sim \sqrt{\frac{\sigma}{\rho \cdot g}} \sim 2.7 \ mm$$

et

$$v_c \sim \frac{4}{3}\pi\cdot\left(\frac{l_c}{2}\right)^3 \sim 10 \ \mu L.$$

Ainsi, dans le cadre de l'invention, pour un liquide donné, chacune des dimensions constituées par le diamètre hydraulique et la longueur du canal borgne est inférieure à la longueur capillaire du liquide.

Ainsi, selon l'invention la réalisation d'un canal borgne connecté directement à un canal (canal principal) d'un réseau fluidique et l'ajout d'un gradient d'énergie de surface le long de sa paroi longitudinale permet de localiser précisément un ménisque de liquide à l'interface avec la phase vapeur.

Le déplacement de ce ménisque est dépendant de la pression du fluide en entrée du canal borgne.

Les inventeurs sont en effet partis du constat que dans un manomètre à liquide le déplacement du ménisque à l'interface avec une bulle d'air sous l'effet d'une pression était influencé par le mouillage du liquide en contact avec les parois du tube capillaire.

Ils ont donc cherché à étudier plus précisément cette influence à partir d'un canal borgne dans lequel sont simultanément présents un fluide en phase liquide et en phase vapeur. De l'air peut aussi être présent dans la phase gazeuse.

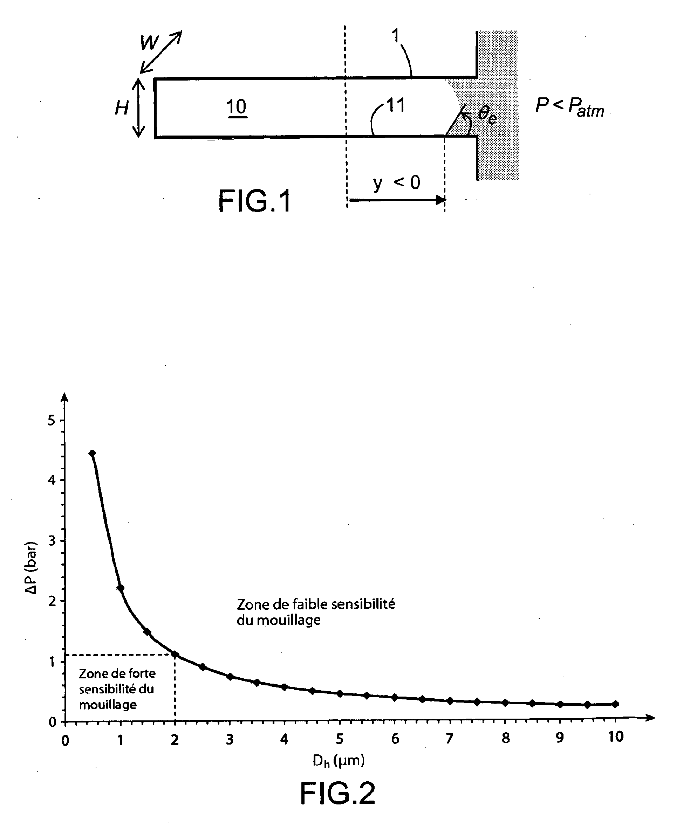

Cette configuration est représentée en figure 1.

La relation d'équilibre de force peut ainsi s'écrire de la manière suivante :

$$P_{liquide} - P_{gaz} = \frac{2(H+W)}{HW}\sigma \cos\theta_e \qquad (1)$$

dans laquelle :

$P_{liquide}$ est la pression du liquide ;
$P_{gaz}$ est la pression du gaz ;
W la largeur du canal borgne ;
H est la hauteur du canal borgne ;
$\sigma$ est la constante de tension superficielle de l'eau ($\sim 72$ mJ/m$^2$) ;
$\theta_e$ est l'angle de mouillage de l'eau sur la paroi longitudinale 11 du canal borgne 1.

Cette équation s'écrit de manière différente :

$$\Delta P = \frac{4}{D_h}\sigma \ \cos\theta_e \qquad (2)$$

où $\Delta P$ = $P_{liquide}$ - $P_{gaz}$ et $D_h$ est le diamètre hydraulique qui est défini par :

$$D_h = \frac{2HW}{(H+W)} \qquad (3)$$

La pression du gaz piégé dans la cavité 10 peut être déterminée par l'équation des gaz parfaits :

$$P_{gaz} = \frac{L_1}{L_1 - y} P_{atm} \qquad (4)$$

dans laquelle Patm est la pression atmosphérique,

L1 est la distance entre un ménisque plat ( $\cos\theta_e = 1$) et le fond de la cavité 10 ;

et y la position du ménisque de liquide (eau) à l'interface avec le gaz.

On peut considérer que l'effet de mouillage est significatif si les deux termes de l'équation (2) sont de même ordre de grandeur.

La figure 2 montre la courbe représentative de la différence de pression en fonction du diamètre hydraulique. La zone située au-dessus de cette courbe est la zone de faible sensibilité du mouillage, alors que celle en-dessous est de forte sensibilité du mouillage. Par exemple, à un diamètre hydraulique de 2 $\mu$m, l'effet du mouillage est significatif si la différence de pression est inférieure à 1,1 bar.

Les inventeurs ont alors étudié l'influence de l'angle de contact (angle de mouillage) sur le déplacement y du ménisque de liquide à l'interface avec le gaz.

En considérant que l'angle de contact est constant, c'est-à-dire en écrivant la relation

$$\cos\theta_e = K \qquad (5')$$

On a la relation :

$$P - \frac{L_1}{L_1 - y} P_{atm} = \frac{4}{D_h}\sigma\,K \qquad (5)$$

D'où :

$$y = L_1\left(1 - \frac{P_{atm}}{P - \frac{4}{D_h}\sigma\,K}\right) \qquad (6)$$

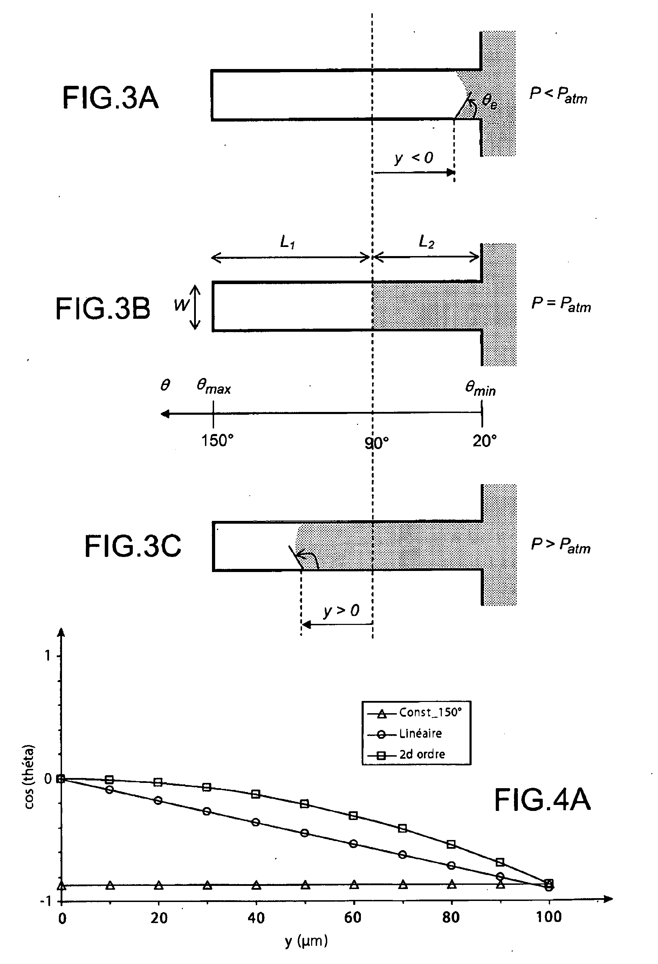

On a illustré en figures 3A à 3C, trois configurations d'angle de contact du liquide différents de valeur respectivement de 20° , 90° et 120° et où les dimensions caractéristiques H, L1 et L2 sont montrées.

En considérant une variation linéaire du cosinus de l'angle de contact le long de la paroi longitudinale du canal borgne, on a

$$\cos\theta_e = K_1\,y \qquad (7)$$

avec

$$K_1 = \frac{\cos\theta_{max}}{L_1} = \frac{-\cos\theta_{min}}{L_2} = \frac{\cos\theta_{max} - \cos\theta_{min}}{L_1 + L_2} \qquad (8)$$

En remplaçant (2) et (3) dans (1), on a la relation :

$$P - \frac{L_1}{L_1 - y} P_{atm} = \frac{4}{D_h} \sigma \, K_1 \, y \qquad (9)$$

$$P(L_1 - y) - L_1 P_{atm} = \frac{4}{D_h} \sigma \, K_1 \left( L_1 y - y^2 \right) \qquad (10)$$

$$y^2 - \left( L_1 + \frac{P}{\frac{4}{D_h} \sigma \, K_1} \right) y + \frac{(P - P_{atm})L_1}{\frac{4}{D_h} \sigma \, K_1} = 0 \qquad (11)$$

$$y^2 + G_1 \, y + G_2 = 0 \qquad (12)$$

avec

$$G_1 = -\left( L_1 + \frac{P}{\frac{4}{D_h} \sigma \, K_1} \right) \qquad (13)$$

$$G_2 = \frac{(P - P_{atm})L_1}{\frac{4}{D_h} \sigma K_1} \qquad (14)$$

$K_1 < 0$
Ainsi, on a la relation

$$y = \frac{-G_1 + \sqrt{G_1^2 - 4G_2}}{2} \qquad (15)$$

En considérant une variation du deuxième ordre du cosinus de l'angle de contact le long de la paroi longitudinale du canal borgne, on a

$$\cos\theta_e = K_2 \, y^2 \qquad (16)$$

avec

$$K_2 = \frac{\cos\theta_{max}}{L_1^2} \qquad (17)$$

Ainsi, pour la position y du ménisque on obtient la relation :

$$y^3 - L_1 y^2 - \frac{P}{\frac{4}{D_h}\sigma K_2} y + \frac{(P - P_{atm})L_1}{\frac{4}{D_h}\sigma K_2} = 0 \qquad (18)$$

Les inventeurs ont alors réalisé une étude comparée en choisissant l'exemple numérique suivant :

- plage de pression d'étude de 1 à 2 bar pour avoir une grande sensibilité du mouillage,
- L1 = L2 = 100 $\mu$m,
- profondeur et largeur de canal H = W = 1$\mu$m,
- angle $\theta_e$ variant de 0° depuis l'entrée du canal borgne à 90° sur la longueur L2,
- angle $\theta_e$ variant de 90° à 150° sur la longueur L1 au fond du canal borgne.

La figure 4A montre la courbe représentative du cosinus de l'angle $\theta_e$ en fonction de la position y du ménisque liquide.

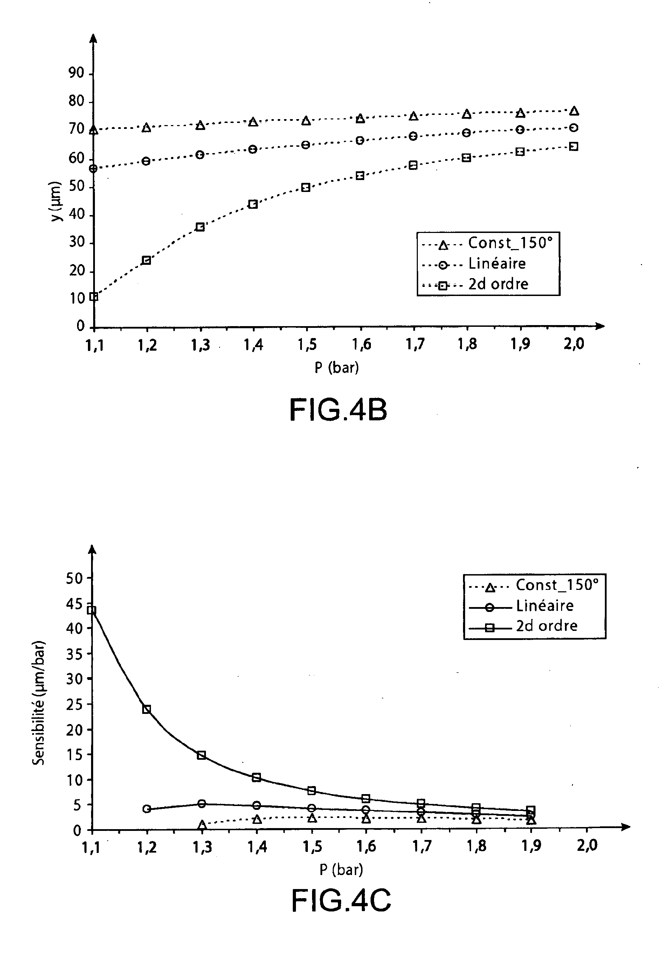

La figure 4B montre la courbe représentative de la position du ménisque y en fonction de la pression P.

La figure 4C montre la courbe représentative de la sensibilité de déplacement du ménisque en fonction de la pression P.

Ainsi, à partir de cette étude, les inventeurs sont parvenus à la conclusion qu'en faisant varier l'angle de mouillage (angle de contact) on pouvait très fortement augmenter la sensibilité de mesure d'un manomètre dont le principe de mesure est la position d'un ménisque liquide.

Autrement dit, les inventeurs ont en conclu que l'utilisation d'un gradient d'énergie de surface permet d'augmenter la sensibilité de mesure d'un manomètre par rapport à une surface hydrophobe à énergie de surface constante. En outre, ils ont conclu que cette augmentation de sensibilité de mesure est encore plus importante avec un gradient de cosinus d'angle de 2$^{ème}$ ordre comparativement à un gradient de cosinus linéaire.

Ainsi, un dispositif selon l'invention peut être, du fait de sa grande sensibilité de mesure, de dimensions microscopiques pour des variations de pression relativement minimes, typiquement de l'ordre de 1 bar. Il peut donc être intégré dans un réseau de fluidique sans nuire à sa compacité ni à son fonctionnement.

Pour réaliser le gradient d'énergie de surface sur au moins l'une des parois longitudinales, on peut jouer sur plusieurs paramètres tels que la variation de la composition chimique du matériau en surface de la ou des paroi (s) longitudinale (s) ou la variation de la structuration de la ou des paroi (s) longitudinale(s). Ladite variation de structuration de nature micro ou nanométrique relève d'une variation soit de la forme (profondeur, largeur) des cavités, soit de la densité desdites cavités soit de la forme et de la densité des cavités formant structuration de surface desdites parois. On peut ainsi principalement envisager trois solutions comme suit :

- une composition chimique uniforme et une structure de surface à gradient de profondeur croissant depuis l'entrée du canal borgne vers le fond,
- une composition à gradient chimique depuis l'entrée du canal borgne vers le fond et une structure de surface uniforme,
- une composition à gradient chimique et une structure de surface à gradient de profondeur depuis l'entrée du canal borgne vers le fond uniforme.

Pour un dispositif de dimensions microscopiques à intégrer dans une pile à combustible ou échangeur thermique à fluide diphasique, les dimensions transversales (ou diamètre hydraulique) du canal borgne peuvent être comprises entre 50 nm et 5 $\mu$m, pour mesurer une variation de pression supérieure à 0.5 bar (Figure 2).

La longueur du canal borgne peut être comprise entre 50 nm et 500 $\mu$m.

Le canal borgne peut être de section transversale sensiblement rectangulaire, c'est-à-dire une forme rectangulaire ou assimilable, avec/sans arête (polygonale/ovoïdal).

On prévoit avantageusement d'intégrer en partie dans le canal borgne les moyens de mesure de la position du ménisque de liquide dans le canal borgne pour déterminer la pression du fluide.

Dans un mode de réalisation avantageux, ces moyens de mesure comprennent deux électrodes agencées sur deux parties de parois longitudinales en regard l'une de l'autre et s'étendant chacune de l'entrée au fond du canal borgne, les électrodes formant avec un fluide diphasique présent dans le canal borgne un condensateur à capacitance variable.

La mesure de pression est déterminée par la position du ménisque liquide à l'équilibre dans le canal borgne. Le ménisque définit un rapport de volume liquide/vapeur variable dans le canal selon sa position. Ce rapport de volume, ou sa variation, peut être apprécié par une mesure électrique de la capacité moyenne du fluide diphasique dans le canal.

L'utilisation des deux électrodes en vis-à-vis permet de mesurer la capacitance du fluide.

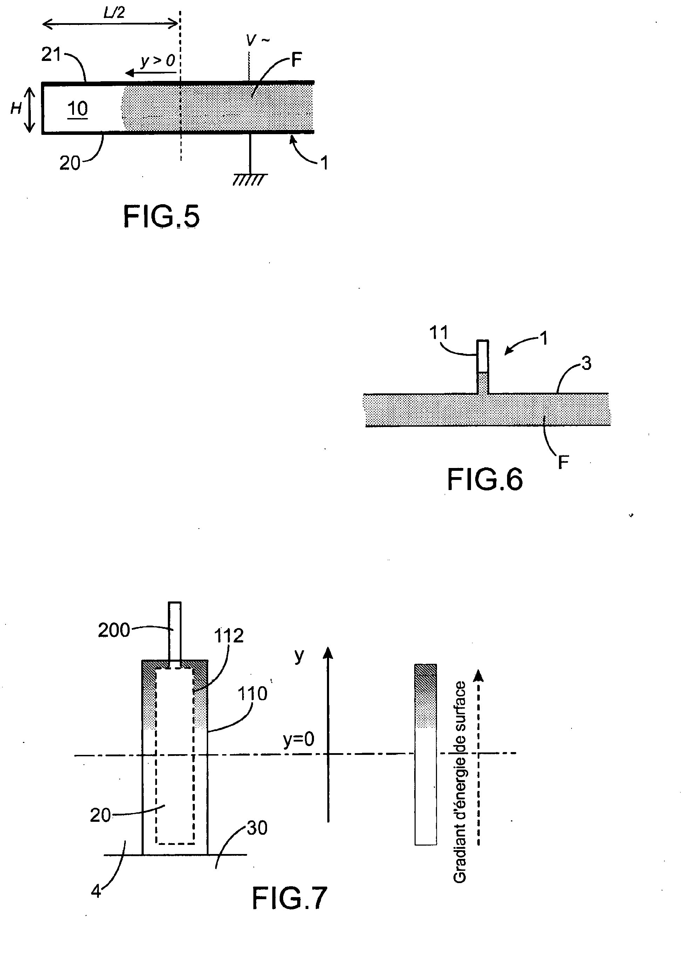

En figure 5, on a représenté une implantation de deux électrodes 20, 21 agencées en parallèle l'une de l'autre en haut et en bas du canal borgne 1.

La distance entre les deux électrodes est proche de la profondeur du diamètre hydraulique du manomètre.

La longueur et la largeur des électrodes sont celles du manomètre. La capacitance totale est la somme de la capacitance de la phase vapeur et de la phase liquide du fluide diphasique

$$C_t = C_l + Cv \qquad (20)$$

avec

$$C_l = \varepsilon_0 \varepsilon_l \frac{W\left(\frac{L}{2} + y\right)}{H} \qquad (21)$$

$$Cv = \varepsilon_0 \varepsilon v \frac{W\left(\frac{L}{2} - y\right)}{H} \qquad (22)$$

relations dans lesquelles $\varepsilon_0$ est la permittivité absolue du vide, $\varepsilon_0 = 8{,}854 \times 10^{-12}$ F/m ; $\varepsilon_l$ et $\varepsilon v$ sont respectivement les permittivité relatives dans l'eau et dans l'air.

Ainsi, la capacitance totale est donnée par la relation :

$$C_t = \frac{W}{H}\varepsilon_0(\varepsilon_l + \varepsilon_a)\frac{L}{2} + \frac{W}{H}\varepsilon_0(\varepsilon_l - \varepsilon_a)y \qquad (19)$$

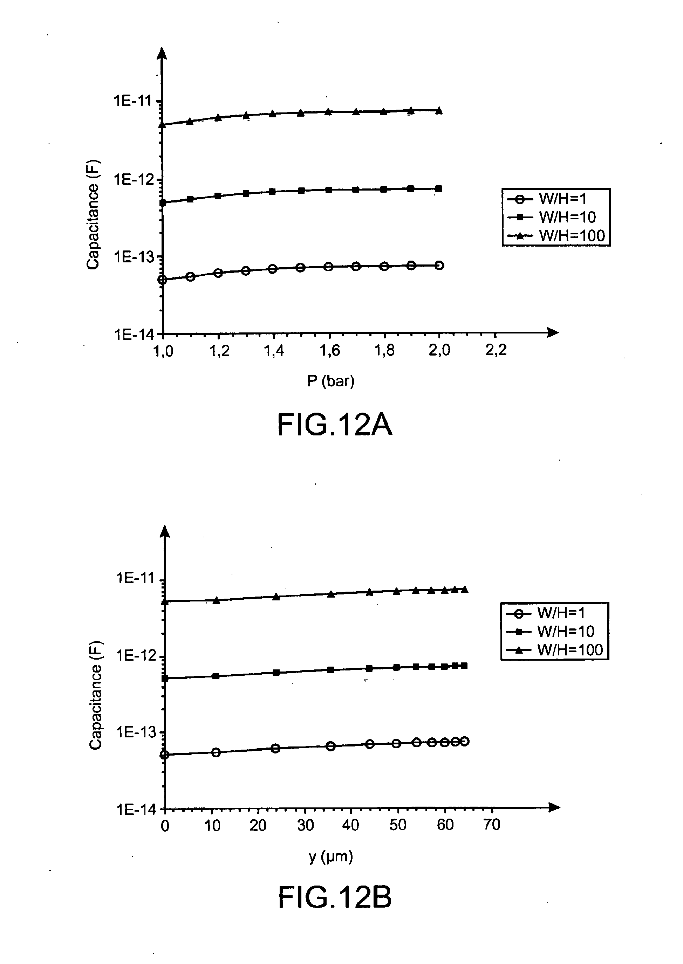

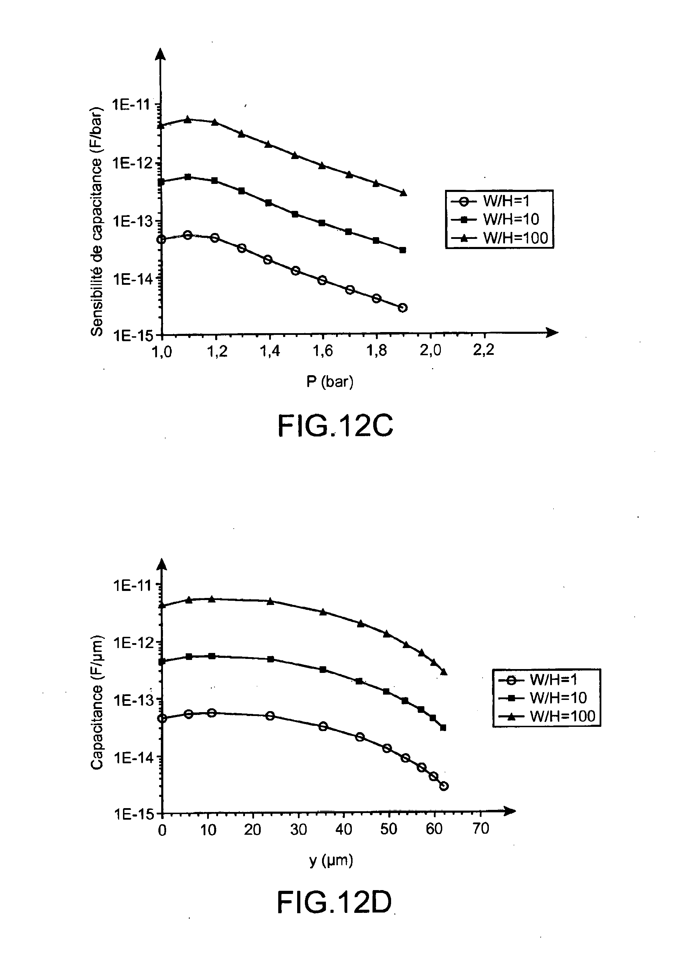

La capacitance totale, en fonction du rapport entre les dimensions transversales (W/H) du canal borgne, est représentée sur les figures 12A et 12B. Les figures 12C et 12D montrent que la sensibilité de mesure sera d'autant plus grande que ce rapport est important. Dans le cas pratique, ce rapport est supérieur à 1.

Bien évidemment, l'homme de l'art tiendra compte de l'évolution de la permittivité relative de la phase liquide, telle que l'eau en fonction de la température.

L'invention concerne également un procédé de réalisation d'un dispositif formant manomètre décrit ci-dessus, selon lequel on réalise les étapes suivantes :

   a/ réalisation d'une première partie longitudinale d'un canal borgne dans une plaque de substrat comprenant une première portion d'un canal principal à l'intérieur duquel un fluide diphasique est apte à circuler,
   b/ réalisation d'un gradient d'énergie de surface sur la première partie du canal borgne,
   c/ réalisation d'une deuxième partie longitudinale du canal borgne dans une autre plaque de substrat comprenant une deuxième portion d'un canal principal à l'intérieur duquel un fluide diphasique est apte à circuler, la première et la deuxième parties longitudinales du canal borgne étant de longueur identique,
   d/ report d'une plaque de substrat sur l'autre avec alignement des deux parties longitudinales du canal borgne et des deux portions du canal principal,
   e/ fermeture des deux plaques de substrat entre elles.

Pour réaliser une composition à gradient chimique selon les étapes b/ et d/, on peut le faire par un procédé dit procédé SAM (procédé d'auto-assemblage des molécules, en anglais « SELF-ALIGNED-MOLECULES ») et déposer tout d'abord une couche de molécules hydrophobes sur la surface du canal. La couche hydrophobe est ensuite partiellement retirée par un plasma ou une ablation laser afin de découvrir localement un substrat hydrophile. L'inverse est également envisageable : une couche de molécule hydrophile sur un substrat hydrophobe.

Le contrôle du design de gravure/ablation permet ainsi de réaliser un gradient chimique de surface. Le gradient peut aussi être obtenu par évaporation d'une molécule fonctionnalisée.

Selon une variante de réalisation, au préalable de l'étape d/, on réalise un même gradient d'énergie de surface sur la deuxième partie longitudinale du canal borgne.

Pour intégrer les électrodes en tant que moyens de mesure, au préalable de chacune des étapes b/ et d/, on réalise avantageusement un dépôt d'une couche mince métallique constituant une électrode dans chaque partie longitudinale de canal borgne. L'électrode peut être déposée en couche mince par une technique de dépôt sous vide de type PVD d'un métal tel que Ti, Cu,....

Dans le cas où la plaque est conductrice, l'élément de connexion électrique avec les électrodes peut être réalisé en face arrière. Dans le cas contraire, un chemin de contact peut être réalisé en même temps et selon le même procédé que l'électrode.

Selon les configurations de plaques conductrices ou non, il est également possible de prévoir une ou plusieurs couches électroniquement isolantes (Ex. $SiO_2$, $TiO_2$,...) afin d'isoler électriquement le condensateur constitué par les électrodes et le fluide diphasique.

L'invention concerne également un réseau fluidique intégrant un ou plusieurs dispositifs formant manomètres décrit précédemment.

L'invention concerne également une pile à combustible comprenant un tel réseau fluidique, au moins un des manomètres étant adapté pour mesurer la pression de l'eau produite à la cathode ou à l'anode.

L'invention concerne enfin un échangeur thermique à fluide diphasique susceptible de passer d'une phase liquide à une phase vapeur comprenant un tel réseau fluidique, au moins un des manomètres étant adapté pour mesurer la pression du fluide.

## BRÈVE DESCRIPTION DES DESSINS

D'autres avantages et caractéristiques de l'invention ressortiront mieux à la lecture de la description détaillée faite à titre illustratif et non limitatif en référence aux figures suivantes parmi lesquelles :

- la figure 1 représente en vue de coupe schématique longitudinale un canal borgne 1 d'un dispositif selon l'invention,
- la figure 2 montre la courbe représentative de l'évolution des variations de pression en fonction du diamètre hydraulique d'un canal borgne d'un dispositif selon l'invention,

- les figures 3A à 3C représentent en vue de coupe longitudinale d'un canal borgne d'un dispositif selon l'invention, trois configurations d'angle de contact différentes,
- la figure 4A montre la courbe représentative du cosinus de l'angle $\theta_e$ en fonction de la position y du ménisque liquide dans le canal borgne,
- la figure 4B montre la courbe représentative de la position du ménisque y en fonction de la pression P,
- la figure 4C montre la courbe représentative de la sensibilité de déplacement du ménisque en fonction de la pression P,
- la figure 5 montre l'implantation de deux électrodes en tant que moyens de mesure de la position du ménisque liquide dans le canal borgne d'un dispositif selon l'invention,
- la figure 6 est une représentation schématique d'un dispositif selon l'invention,
- les figures 7 à 11B montrent différentes étapes de réalisation d'un canal borgne d'un dispositif selon l'invention,
- les figures 12A à 12D montrent les différentes courbes représentatives de l'évolution de la capacitance d'un fluide diphasique en fonction de la pression et de la position du ménisque liquide respectivement dans un canal borgne du dispositif selon l'invention et selon la valeur du rapport entre dimensions du canal borgne.

## EXPOSÉ DÉTAILLÉ DE MODES DE RÉALISATION PARTICULIERS

Les figures 1 à 5 ont été commentées en préambule, elles ne sont donc pas commentées ici.

Le dispositif formant manomètre selon l'invention est destiné à la mesure de pression d'un fluide diphasique-F.

Il comprend un canal borgne 1 débouchant sur un canal principal 3 d'un réseau fluidique, ouvert ou fermé, au travers duquel circule un fluide diphasique F. Ce canal borgne 1 fait ainsi partie intégrante du réseau.

Chacune des dimensions (longueur, profondeur, largeur) du canal borgne 1 est inférieure à la longueur capillaire de la phase liquide du fluide.

Au moins l'une des parois longitudinales 11 du canal borgne 1 présente un gradient d'énergie de surface décroissant depuis son entrée vers le fond.

Ainsi, selon l'invention, le gradient d'énergie de surface permet d'augmenter l'angle de mouillage du ménisque de la phase liquide du fluide dans le canal borgne 1 depuis son entrée vers le fond.

On a représenté aux figures 7 à 11B différentes étapes de réalisation d'un dispositif.

On réalise d'une première partie 110 longitudinale d'un canal borgne dans une plaque de substrat 4 comprenant une première portion 30 d'un canal principal à l'intérieur duquel un fluide diphasique est apte à circuler.

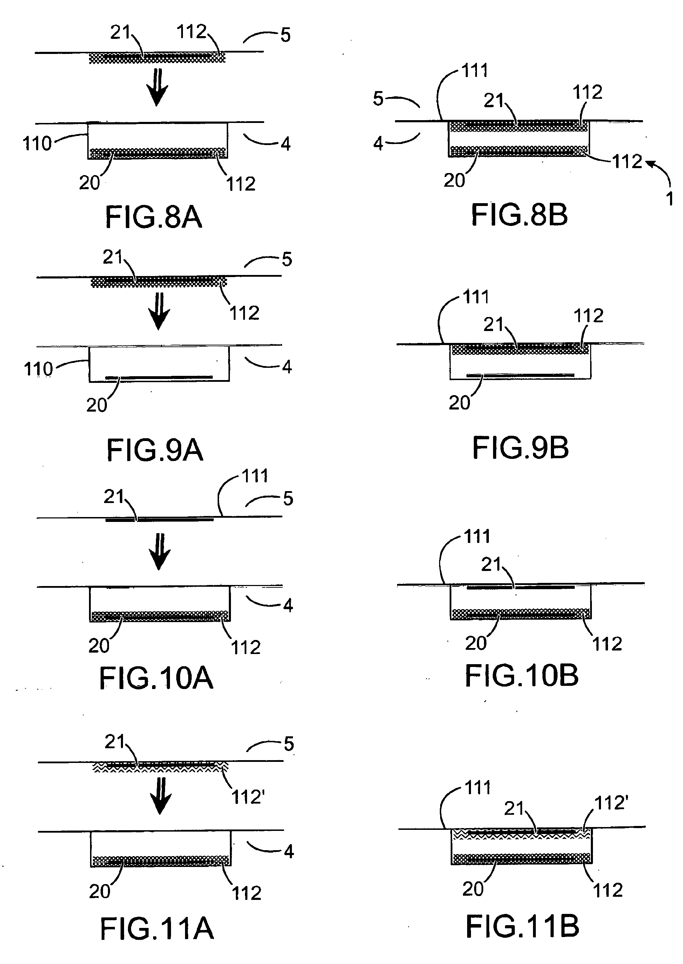

On dépose une couche métallique pour réaliser une électrode 20 avec sa prise de contact 200 sur la première partie 110. Puis, on réalise un gradient d'énergie de surface 112 en surface de la couche d'électrode 20 (vue de dessus de la figure 7 et vues en coupe des figures 8A à 11B).

On réalise de même une deuxième partie longitudinale 111 du canal borgne dans une autre plaque de substrat 5 comprenant une deuxième portion d'un canal principal à l'intérieur duquel un fluide diphasique est apte à circuler. On dépose de même une couche métallique pour réaliser une électrode 21 avec sa prise de contact puis on réalise un gradient d'énergie de surface identique sur la deuxième partie 111 du canal borgne 1.

La première 111 et la deuxième 110 parties longitudinales du canal borgne sont de longueur identique.

On effectue alors un report d'une plaque de substrat 5 sur l'autre 4 avec alignement des deux parties longitudinales 110, 111 du canal borgne et des deux portions du canal principal (figure 8A, 9A, 10A, 11A).

Enfin, on réalise l'étape de fermeture des deux plaques de substrat 4, 5 entre elles (figure 8B, 9B, 10B, 11B).

En ce qui concerne la réalisation du gradient d'énergie, différentes approches sont envisageables telles que deux gradients identiques en regard l'un de l'autre (figures 8A et 8B).

Alternativement, on peut envisager qu'une des parois ne présente pas de gradient mais soit d'énergie de surface constante soit hydrophile, soit hydrophobe (figures 9A, 9B dans lesquelles la première partie 110 du canal borgne est dépourvue de gradient d'énergie et figures 10A et 10B dans lesquelles la deuxième partie 111 qui est reportée est dépourvue de gradient d'énergie).

On peut aussi envisager qu'une paroi longitudinale présente un gradient d'énergie de surface donné et l'autre paroi longitudinale en regard présente un gradient d'énergie de surface différent (figures 11A et 11B dans lesquelles la première partie 110 du canal présente un gradient d'énergie de surface 112 tandis que la deuxième' partie 111 présente un gradient d'énergie de surface 112' différent).

Les courbes en figures 12A et 12B montrent la variation de la capacitance totale avec la pression et la position du ménisque d'eau (phase liquide) à l'interface avec de l'air et de la vapeur d'eau (phase gazeuse) respectivement dans un canal borgne selon le rapport entre dimensions entre dimensions transversales (W/H).

Bien que décrite en relation avec un fluide diphasique dont la phase liquide est l'eau et la phase vapeur est l'air et la vapeur d'eau, l'invention peut s'appliquer à bien d'autres fluides diphasiques.

De même, d'autres procédés de réalisation peuvent être envisagés pour réaliser le canal borgne du dispositif selon l'invention. On peut ainsi prévoir un usinage mécanique d'un substrat en aluminium ou acier, une lithographie et gravure d'un substrat silicium ou une réplication par injection ou embossage d'un substrat en polymère.

**Revendications**

1. Dispositif formant manomètre, destiné à la mesure de la pression d'un fluide diphasique dans un réseau fluidique, comprenant :

   - un premier canal (3) à l'intérieur duquel un fluide diphasique est apte à circuler,
   - un deuxième canal (1) débouchant sur le premier canal, le deuxième canal étant borgne, **caractérisé en ce que** chacune des dimensions du deuxième canal est inférieure à la longueur capillaire de la phase liquide du fluide, avec au moins une des parois longitudinales (11) présentant un gradient d'énergie de surface décroissant depuis son entrée vers le fond, le gradient d'énergie de surface permettant d'augmenter l'angle de mouillage du ménisque de la phase liquide du fluide dans le canal borgne depuis son entrée vers le fond.

2. Dispositif formant manomètre selon la revendication 1, dans lequel ladite au moins une paroi longitudinale présente une variation de sa structuration de surface depuis l'entrée du canal borgne vers le fond.

3. Dispositif formant manomètre selon la revendication 1, dans lequel ladite au moins une paroi longitudinale présente une variation de sa composition chimique de surface depuis l'entrée du canal borgne vers le fond.

4. Dispositif formant manomètre selon la revendication 1, dans lequel ladite au moins une paroi longitudinale présente une variation de sa structuration de surface et une variation de sa composition chimique de surface depuis l'entrée du canal borgne vers le fond uniforme.

**5.** Dispositif formant manomètre selon l'une des revendications précédentes, dans lequel les dimensions transversales du canal borgne sont comprises entre 50 nm et 5 $\mu$m et/ou dans lequel la longueur du canal borgne est comprise entre 50 nm et 500 $\mu$m.

**6.** Dispositif formant manomètre selon l'une des revendications précédentes, dans lequel le rapport entre les dimensions transversales (W/H) du canal borgne est supérieur à 1.

**7.** Dispositif formant manomètre selon l'une des revendications précédentes, dans lequel le canal borgne est de section transversale sensiblement rectangulaire.

**8.** Dispositif formant manomètre selon l'une des revendications précédentes, comprenant des moyens de mesure de la position du ménisque de liquide dans le canal borgne pour déterminer la pression du fluide, lesdits moyens de mesure étant intégrés en partie dans le canal borgne.

**9.** Dispositif formant manomètre selon la revendication 8, dans lequel les moyens de mesure comprennent deux électrodes agencées sur deux parties de parois longitudinales en regard l'une de l'autre et s'étendant chacune de l'entrée au fond du canal borgne, les électrodes formant avec le fluide diphasique dans le canal borgne un condensateur à capacitance variable.

**10.** Procédé de réalisation d'un dispositif formant manomètre, selon lequel on réalise les étapes suivantes :

a/ réalisation d'une première partie longitudinale (110) d'un canal borgne dans une plaque de substrat (4) comprenant une première portion (30) d'un canal principal à l'intérieur duquel un fluide diphasique est apte à circuler,
b/ réalisation d'un gradient d'énergie de surface sur la première partie du canal borgne,
c/ réalisation d'une deuxième partie longitudinale (111) du canal borgne (1) dans une autre plaque de substrat (5) comprenant une deuxième portion d'un canal principal à l'intérieur duquel un fluide diphasique est apte à circuler , la première et la deuxième parties longitudinales du canal borgne étant de longueur identique,
d/ report d'une plaque de substrat sur l'autre avec alignement des deux parties longitudinales du canal borgne et des deux portions du canal principal,
e/ fermeture des deux plaques de substrat entre elles.

**11.** Procédé de réalisation selon la revendication 10, selon lequel au préalable de l'étape d/, on réalise un même gradient d'énergie de surface sur la deuxième partie longitudinale du canal borgne.

**12.** Procédé de réalisation selon la revendication 11, selon lequel au préalable de chacune des étapes b/ et d/, on réalise un dépôt d'une couche mince métallique constituant une électrode dans chaque partie longitudinale de canal borgne.

**13.** Réseau fluidique intégrant un ou plusieurs dispositifs formant manomètres selon l'une des revendications 1 à 9.

**14.** Pile à combustible comprenant un réseau fluidique selon la revendication 13, au moins un des manomètres étant adapté pour mesurer la pression de l'eau à la cathode ou à l'anode.

**15.** Echangeur thermique à fluide diphasique susceptible de passer d'une phase liquide à une phase vapeur comprenant un réseau fluidique selon la revendication 13, au moins un des manomètres étant adapté pour mesurer la pression du fluide.

**Patentansprüche**

**1.** Vorrichtung, die ein Manometer bildet, dazu bestimmt, den Druck eines zweiphasigen Fluids in einem Fluidnetz zu messen, aufweisend:

einen ersten Kanal (3), in dessen Innerem ein zweiphasiges Fluid zirkulieren kann,
einen zweiten Kanal (1), der auf den ersten Kanal mündet, wobei der zweite Kanal blind ist, **dadurch gekennzeichnet, dass** jede der Abmessungen des zweiten Kanals geringer als die kapillare Länge der flüssigen Phase des Fluids ist, wobei mindestens eine der Längswände (11) einen Oberflächenenergiegradienten aufweist, der von dessen Eingang zum Boden hin abnimmt, wobei der Oberflächenenergiegradient ermöglicht, den Benetzungswinkel des Meniskus der flüssigen Phase des Fluids im Blindkanal von seinem Eingang hin zum Boden zu vergrößern.

2. Vorrichtung, die ein Manometer bildet, nach Anspruch 1, wobei die mindestens eine Längswand eine Variation ihrer Oberflächenstrukturierung vom Eingang des Blindkanals hin zum Boden aufweist.

3. Vorrichtung, die ein Manometer bildet, nach Anspruch 1, wobei die mindestens eine Längswand eine Variation ihrer chemischen Oberflächenzusammensetzung vom Eingang des Blindkanals hin zum Boden aufweist.

4. Vorrichtung, die ein Manometer bildet, nach Anspruch 1, wobei die mindestens eine Längswand eine Variation ihrer Oberflächenstrukturierung und eine Variation ihrer chemischen Oberflächenzusammensetzung vom Eingang des Blindkanals hin zum Boden aufweist, die gleichförmig sind.

5. Vorrichtung, die ein Manometer bildet, nach einem der vorhergehenden Ansprüche, bei der die Transversalabmessungen des Blindkanals im Bereich zwischen 50 nm und 5 $\mu$m liegen und/oder bei der die Länge des Blindkanals zwischen 50 nm und 500 $\mu$m beträgt.

6. Vorrichtung, die ein Manometer bildet, nach einem der vorhergehenden Ansprüche, bei der das Verhältnis zwischen den Transversalabmessungen (W/H) des Blindkanals größer 1 ist.

7. Vorrichtung, die ein Manometer bildet, nach einem der vorhergehenden Ansprüche, bei der der Blindkanal im Wesentlichen rechteckigen Querschnitt aufweist.

8. Vorrichtung, die ein Manometer bildet, nach einem der vorhergehenden Ansprüche, aufweisend Einrichtungen zum Messen der Position des Flüssigkeitsmeniskus im Blindkanal, um den Fluiddruck zu bestimmen, wobei die Messeinrichtungen teilweise in den Blindkanal integriert sind.

9. Vorrichtung, die ein Manometer bildet, nach Anspruch 8, bei der die Messeinrichtungen zwei Elektroden aufweisen, die an zwei Teilen von Längswänden einander gegenüberliegend angeordnet sind und sich jeweils vom Eingang bis zum Boden des Blindkanals erstrecken, wobei die Elektroden mit dem zweiphasigen Fluid in dem Blindkanal einen Kondensator variabler Kapazität bilden.

10. Verfahren zur Ausbildung einer Vorrichtung, die ein Manometer bildet, gemäß dem die folgenden Schritte durchgeführt werden:

a) Ausbilden eines ersten Längsteils (110) eines Blindkanals in einer Substratplatte (4), die einen ersten Abschnitt (30) eines Hauptkanals aufweist, in dessen Innerem ein zweiphasiges Fluid zirkulieren kann,
b) Ausbilden eines Oberflächenenergiegradienten auf dem ersten Teil des Blindkanals,
c) Ausbilden eines zweiten Längsteils (111) des Blindkanals (1) in einer weiteren Substratplatte (5), die einen zweiten Abschnitt eines Hauptkanals aufweist, in dessen Innerem ein zweiphasiges Fluid zirkulieren kann, wobei der erste und der zweite Längsteil des Blindkanals von identischer Länge sind,
d) Aufsetzen einer Substratplatte auf die andere, mit fluchtender Ausrichtung der zwei Längsteile des Blindkanals und der zwei Abschnitte des Hauptkanals,
e) Miteinander Verankern der zwei Substratplatten.

11. Verfahren zur Ausbildung nach Anspruch 10, gemäß dem, vorhergehend zu Schritt d), derselbe Oberflächenenergiegradient auf dem zweiten Längsteil des Blindkanals ausgebildet wird.

12. Verfahren zur Ausbildung nach Anspruch 11, gemäß dem, vorhergehend zu jedem der Schritte b) und d), ein Abscheiden einer dünnen metallischen Schicht durchgeführt wird, die eine Elektrode bildet, und zwar in jedem Längsteil des Blindkanals.

13. Fluidnetz, in dem eine oder mehrere Vorrichtungen, die Manometer bilden, nach einem der Ansprüche 1 bis 9 integriert sind.

14. Brennstoffzelle, die ein Fluidnetz nach Anspruch 13 aufweist, wobei mindestens eines der Manometer geeignet ist, den Wasserdruck an der Kathode oder an der Anode zu messen.

**15.** Wärmetauscher mit zweiphasigem Fluid, das für einen Phasenübergang von einer flüssigen Phase zu einer gasförmigen Phase geeignet ist, aufweisend ein Fluidnetz nach Anspruch 13, wobei mindestens eines der Manometer zum Messen des Fluiddrucks geeignet ist.

**Claims**

**1.** A device forming a manometer, intended to measure the pressure of a biphasic fluid in a fluidic network, including:

- a first channel (3) inside which a biphasic fluid is able to flow,
- a second channel (1) emerging into the first channel, where the second channel is blind, **characterized in that** each of its dimensions is less than the capillary length of the fluid's liquid phase, and with at least one of its lengthways walls (11) having a surface energy gradient which decreases from its inlet to the end, the surface energy gradient enabling the wetting angle of the meniscus of the fluid's liquid phase to be increased in the blind channel from its inlet to the end.

**2.** A device forming a manometer according to claim 1, in which there is a varied surface structuring in the said at least one lengthways wall from the inlet of the blind channel to the end.

**3.** A device forming a manometer according to claim 1, in which there is a varied surface chemical composition in the said at least one lengthways wall from the inlet of the blind channel to the end.

**4.** A device forming a manometer according to claim 1, in which there is a varied surface structuring and a uniform varied surface chemical composition in the said at least one lengthways wall from the inlet of the blind channel to the end.

**5.** A device forming a manometer according to one of the previous claims, in which the transverse dimensions of the blind channel are between 50 nm and 5 $\mu$m and/or the length of the blind channel is between 50 nm and 500 $\mu$m.

**6.** A device forming a manometer according to one of the previous claims, in which the ratio between the transverse dimensions (W/H) of the blind channel is greater than 1.

**7.** A device forming a manometer according to one of the previous claims, in which the blind channel is of a roughly rectangular transverse section.

**8.** A device forming a manometer according to one of the previous claims, including means for measuring the position of the liquid meniscus in the blind channel to determine the pressure of the fluid, where the said measuring means are incorporated partly in the blind channel.

**9.** A device forming a manometer according to claim 5, in which the measuring means include two electrodes positioned on two portions of lengthways walls facing one another, and each extending from the inlet to the end of the blind channel, where the electrodes form with the biphasic fluid in the blind channel a variable capacitance condenser.

**10.** A method for producing a device forming a manometer, according to which the following steps are accomplished:

a/ production of a first lengthways portion (110) of a blind channel in a substrate plate (4) including a first portion (30) of a main channel in which a biphasic fluid is able to flow,
b/ production of a surface energy gradient in the first portion of the blind channel,
c/ production of a second lengthways portion (111) of the blind channel (1) in another substrate plate (5) including a second portion of a main channel within which a biphasic fluid is able to flow, where the first and second lengthways portions of the blind channel are of identical lengths,
d/ transfer from one substrate plate to the other, with alignment of both lengthways portions of the blind channel and of both portions of the main channel,
e/ fastening of both substrate plates to one another.

**11.** A method of production according to claim 10, according to which, prior to step d/, the same surface energy gradient is produced on the second lengthways portion of the blind channel.

**12.** A method of production according to claim 11, according to which, before each of steps b/ and d/, a deposit of a thin metal layer is made, constituting an electrode in each lengthways portion of the blind channel.

**13.** A fluidic network incorporating one or more devices forming manometers according to one of the claims 1 to 9.

**14.** A fuel cell, including a fluidic network according to claim 13, where at least one of the manometers is able to measure the water pressure at the cathode or at the anode.

**15.** A biphasic fluid heat exchanger able to pass from a liquid phase to a vapour phase, including a fluidic network according to claim 13, where at least one of the manometers is able to measure the pressure of the fluid.

FIG.1

FIG.2

**FIG.3A**

$P < P_{atm}$

$y < 0$

$\theta_e$

$L_1$ $L_2$

$W$

**FIG.3B**

$P = P_{atm}$

$\theta$ $\theta_{max}$ $\theta_{min}$

150° 90° 20°

**FIG.3C**

$P > P_{atm}$

$y > 0$

cos (théta)

- Const_150°
- Linéaire
- 2d ordre

**FIG.4A**

y (µm)

FIG.4B

FIG.4C

FIG.5

FIG.6

FIG.7

FIG.8A

FIG.8B

FIG.9A

FIG.9B

FIG.10A

FIG.10B

FIG.11A

FIG.11B

FIG.12A

FIG.12B

FIG.12C

FIG.12D

## RÉFÉRENCES CITÉES DANS LA DESCRIPTION

**Documents brevets cités dans la description**

- US 4404855 A

**Littérature non-brevet citée dans la description**

- **SRIRASTAVA ; BURNS.** Microfluidic pressure sensing using trapped air compression. *Lab on a chip,* 2007, vol. 7, 633-637